(19) Europäisches Patentamt
European Patent Office
Office européen des brevets

(11) **EP 2 485 913 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **10754694.7**

(22) Anmeldetag: **13.09.2010**

(51) Int Cl.:
*B60K 35/00* *(2006.01)*     *B60K 37/06* *(2006.01)*
*G06F 3/048* *(2013.01)*     *G06T 3/60* *(2006.01)*

(86) Internationale Anmeldenummer:
**PCT/EP2010/005599**

(87) Internationale Veröffentlichungsnummer:
**WO 2011/042110 (14.04.2011 Gazette 2011/15)**

(54) **VERFAHREN UND ANZEIGEEINRICHTUNG ZUM ANZEIGEN VON INFORMATIONEN**

METHOD AND DISPLAY DEVICE FOR DISPLAYING INFORMATION

PROCEDE ET AFFICHEUR POUR AFFICHER DES INFORMATIONS

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.10.2009 DE 102009048834**

(43) Veröffentlichungstag der Anmeldung:
**15.08.2012 Patentblatt 2012/33**

(73) Patentinhaber: **Volkswagen Aktiengesellschaft 38440 Wolfsburg (DE)**

(72) Erfinder:
• **DEHMANN, Rainer**
  **10961 Berlin (DE)**
• **KUHN, Mathias**
  **14129 Berlin (DE)**
• **HAUSCHILD, Frank**
  **10587 Berlin (DE)**

(56) Entgegenhaltungen:
**WO-A1-2010/010025**     **WO-A2-2006/108617**
**DE-A1-102006 062 416**     **DE-A1-102007 039 444**
**US-A- 5 463 725**     **US-A- 5 754 809**
**US-A- 5 880 733**

**Beschreibung**

Die vorliegende Erfindung betrifft ein Verfahren zum Anzeigen von Informationen. Bei dem Verfahren wird zumindest ein erstes graphisches Objekt auf einer Anzeigefläche graphisch dargestellt. Ferner werden bei einem Wechsel zu einem zweiten graphischen Objekt von einer Steuereinrichtung Graphikdaten erzeugt, welche die Anzeigefläche so ansteuern, dass das erste Objekt verschwindet und das zweite Objekt eingeblendet wird. Des Weiteren betrifft die Erfindung eine Anzeigeeinrichtung zum Anzeigen von Informationen mit einer Anzeigefläche zur graphischen Darstellung zumindest von graphischen Objekten und einer Steuereinrichtung, mit welcher bei einem Wechsel von einem ersten graphischen Objekt zu einem zweiten graphischen Objekt Graphikdaten erzeugbar sind, welche die Anzeigefläche so ansteuern, dass das erste Objekt verschwindet und das zweite Objekt eingeblendet wird. Die Anzeigeeinrichtung ist insbesondere Teil eines Fahrzeugs. Sie kann jedoch auch in Verbindung mit anderen Geräten, insbesondere tragbaren Geräten wie einem Musikspieler, einem Mobiltelefon oder einem mobilen Navigationssystem eingesetzt werden.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Aus der gattungsgemässen WO 2009/024474 A1 ist ein Verfahren zum Anzeigen von Informationen bekannt, bei dem ein flächiges Objekt auf einem Display graphisch dargestellt wird. Das graphische Objekt umfasst ein Anzeigefeld und ein Bedienfeld. Das Anzeigefeld wird auf einer Seite des flächigen graphischen Objekts und das Bedienfeld auf der anderen Seite des flächigen graphischen Objekts dargerstellt. Auf eine Eingabe mittels einer Eingabeeinrichtung werden die Graphikdaten zur Anzeige auf dem Display so verändert, dass sich das graphische Objekt bei einer perspektivischen Darstellung auf dem Display von einer Seite zu der anderen Seite dreht. Aus der nachveröffentlichten WO 2010/010025 A1 ist ein Verfahren und eine Anzeigeeinrichtung zum Anzeigen von Informationen in einem Kraftfahrzeug bekannt, bei denen zumindest ein flächiges Objekt in einer ersten Darstellung, welche eine Seite des Objekts zeigt, und in einer zweiten Darstellung, welche die andere Seite des Objekts zeigt, mittels eines in dem Kraftfahrzeug befestigten Displays grafisch dargestellt wird. Dabei kann die Darstellung des grafischen Objekts so verändert werden, dass sich das grafische Objekt bei einer perspektivischen Darstellung auf dem Display von einer Seite zu der anderen Seite dreht, wobei bei der Drehung das flächige grafische Objekt immer vollständig zumindest perspektivisch dargestellt wird.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Auch bei der Anzeige von Informationen in mobilen Geräten sollte die Information schnell und intuitiv erfasst werden können. Der Nutzer des mobilen Geräts nimmt nämlich die angezeigte Information häufig auf, während er andere Tätigkeiten ausführt. Dabei ergibt sich auch das Problem, dass die Anzeigefläche eines mobilen Geräts vielfach relativ klein ist, so dass es besonders wichtig ist, dass die dargestellten Informationen leicht erfassbar und ein Wechsel des Informationsinhalts leicht nachvollziehbar ist.

Der vorliegenden Erfindung liegt die Aufgabe zugrunde, ein Verfahren und eine Anzeigeeinrichtung der eingangs genannten Art bereitzustellen, mit denen eine Veränderung der angezeigten Information vom Betrachter einfach und intuitiv nachvollzogen werden kann.

Erfindungsgemäß wird diese Aufgabe durch ein Verfahren mit den Merkmalen des Anspruchs 1 und eine Anzeigeeinrichtung mit den Merkmalen des Anspruchs 12 gelöst. Vorteilhafte Aus- und Weiterbildungen ergeben sich aus den abhängigen Ansprüchen.

Das erfindungsgemäße Verfahren ist dadurch gekennzeichnet, dass bei einem Wechsel zu dem zweiten Objekt von einer Steuereinrichtung Graphikdaten erzeugt werden, welche die Anzeigefläche so ansteuern, dass das erste graphische Objekt bei der perspektivischen Darstellung auf der Anzeigefläche um eine erste außerhalb der Anzeigefläche liegende Achse herausgeschwenkt wird und das zweite graphische Objekt bei der perspektivischen Darstellung auf der Anzeigefläche um eine zweite außerhalb der Anzeigefläche liegende Achse hereingeschwenkt wird, bis es vollständig angezeigt wird, und dass die Schärfe des Anzeigeinhalts innerhalb des ersten und/oder des zweiten Objekts beim Schwenken verändert wird.

Durch das erfindungsgemäße Verfahren kann eine Informationsanzeige bereitgestellt werden, bei welcher der Wechsel zwischen zwei graphischen Objekten leicht und intuitiv nachvollzogen werden kann. Insbesondere bei menügeführten graphischen Systemen führt die erfindungsgemäße Informationsdarstellung zu einer Verminderung des Komplexitätsgrades und zu einem einfacheren Verständnis des Aufbaus des menügeführten Systems. Es hat sich herausgestellt, dass der Wechsel von Inhalten bei bekannten Verfahren zum Anzeigen von Informationen häufig sehr abstrakt erfolgt. Dies kann zu Verständnisproblemen beim Nutzer führen. Außerdem erhöht sich hierdurch die vom Nutzer wahrgenommene Komplexität des Vorgangs beim Informationswechsel durch die Art der graphischen Darstellung. Dies kann durch das erfindungsgemäße Verfahren vermieden werden. Das Verfahren führt dazu, dass der Nutzer das der Informationsanzeige zugrundeliegende System leichter versteht. Hierdurch wird er bei der Informationsaufnahme weniger von anderen Aktivitäten abgelenkt. Dies führt bei einem Einsatz des erfindungsgemäßen Verfahrens in einem Fahrzeug zu einer erhöhten Sicherheit beim Führen des Fahrzeugs, wenn die Informationsaufnahme durch den Fahrer erfolgt.

Die erste Achse, um welche das erste Objekt herausgeschwenkt wird, und die zweite Achse, um welche das zweite Objekt hereingeschwenkt wird, können bei dem erfindungsgemäßen Verfahren zusammenfallen. Die erste und/oder die zweite Achse können beabstandet zu der Anzeigefläche angeordnet sein. Sie können jedoch auch mit einer Randseite der Anzeigefläche zusammenfallen. Des Weiteren ist bzw. sind die erste und/oder die zweite Achse parallel zu einer Seite der Anzeigefläche ausgerichtet.

Gemäß einer Ausgestaltung des erfindungsgemäßen Verfahrens ist der Drehsinn beim Schwenken des ersten und zweiten Objekts derselbe. Ferner kann zumindest ein Teil des zweiten Objekts erst dann angezeigt werden, wenn das erste Objekt nicht mehr angezeigt wird. Das erste Objekt verschwindet in diesem Fall somit zunächst vollständig, bevor das zweite Objekt hereingeschwenkt wird.

Gemäß einer weiteren Ausgestaltung des erfindungsgemäßen Verfahrens nimmt die Schärfe des Anzeigeinhalts innerhalb des ersten Objekts insbesondere beim Herausschwenken ab und die Schärfe des Anzeigeinhalts nimmt innerhalb des zweiten Objekts insbesondere beim Hereinschwenken zu. Auf diese Weise wird das Verschwinden des ersten Objekts und das Auftauchen des zweiten Objekts auch durch die Art und Weise der Darstellung des Anzeigeinhalts der Objekte für den Betrachter visualisiert.

Gemäß einer Ausgestaltung des erfindungsgemäßen Verfahrens ist dem ersten Objekt ein Zeitintervall für die Anzeige des Objekts zugeordnet. Nach Ablauf des Zeitintervalls wechselt die Anzeige auf der Anzeigefläche automatisch zu dem zweiten Objekt. Die graphischen Objekte können beispielsweise Musikstücken oder Mengen von Musikstücken zugeordnet sein. Das Musikstück oder die Menge der Musikstücke, d.h. ein Album, laufen für ein bestimmtes Zeitintervall. Nach Ablauf des Zeitintervalls wird automatisch das nächste Musikstück bzw. das nächste Album abgespielt. Beim Übergang von einem Musikstück zu einem anderen bzw. von einem Album zu einem anderen wird das dem ersten Musikstück bzw. dem ersten Album zugeordnete graphische Objekt herausgeschwenkt und das zweite graphische Objekt des Musikstücks bzw. des zweiten Albums hereingeschwenkt, so dass der Nutzer den Wechsel einfach und intuitiv erfassen kann.

Des Weiteren kann der Wechsel von dem ersten zu dem zweiten Objekt von einem Nutzer ausgelöst werden. Der Nutzer kann beispielsweise eine Eingabeeinrichtung betätigen, um den Wechsel auszulösen.

Gemäß einer Ausgestaltung des erfindungsgemäßen Verfahrens erzeugt die Steuereinrichtung Graphikdaten für aufeinanderfolgende Zwischenbilder zur Darstellung des Herausschwenkens des ersten Objekts und/oder des Hereinschwenkens des zweiten Objekts. Es wird somit eine Animation dargestellt. Ferner wird bevorzugt das Schwenken in eine erste Phase, bei der Bildpunkte des graphischen Objekts beschleunigt bewegt werden, und eine zweite Phase, bei der Bildpunkte des graphischen Objekts abgebremst werden, unterteilt.

Unter einer beschleunigten Bewegung wird hier eine positive Beschleunigung verstanden, bei der sich die Geschwindigkeit erhöht, und unter einer abgebremsten Bewegung wird eine negative Beschleunigung verstanden, bei der sich die Geschwindigkeit erniedrigt.

Gemäß einer Ausgestaltung des erfindungsgemäßen Verfahrens ist die Anzeigefläche in einem Kraftfahrzeug angeordnet. In diesem Fall kann beispielsweise die Geschwindigkeit des Kraftfahrzeugs gemessen werden und die Dauer des Herein- und/oder des Herausschwenkens und/oder die Dauer der ersten und/oder zweiten Phase in Abhängigkeit von der Geschwindigkeit des Kraftfahrzeugs ermittelt werden. Bevorzugt ist die Dauer des Schwenkens umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Schwenkdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen kann.

Die erfindungsgemäße Anzeigeeinrichtung ist dadurch gekennzeichnet, dass von der Steuereinrichtung die Graphikdaten so veränderbar sind, dass bei einem Wechsel zu dem zweiten graphischen Objekt Graphikdaten erzeugbar sind, welche die Anzeigefläche so ansteuern, dass das erste graphische Objekt bei der perspektivischen Darstellung auf der Anzeigefläche um eine erste außerhalb der Anzeigefläche liegende Achse herausgeschwenkt wird und das zweite graphische Objekt bei der perspektivischen Darstellung auf der Anzeigefläche um eine zweite außerhalb der Anzeigefläche liegende Achse hereingeschwenkt wird, bis es vollständig angezeigt wird.

Die erfindungsgemäße Anzeigeeinrichtung ist insbesondere so ausgebildet, dass sie das vorstehend beschriebene Verfahren teilweise oder vollständig ausführen kann.

Gemäß einer Ausgestaltung der erfindungsgemäßen Anzeigeeinrichtung ist eine Eingabeeinrichtung vorgesehen, wobei der Wechsel von dem ersten zu dem zweiten Objekt durch eine Eingabe in die Eingabeeinrichtung auslösbar ist. Bei der Eingabeeinrichtung kann es sich insbesondere um eine berührungsempfindliche Oberfläche der Anzeigefläche handeln. Des Weiteren kann die Eingabeeinrichtung so ausgebildet sein, dass sie eine vom Nutzer vor der Anzeigefläche ausgeführte Geste erfassen und auswerten kann.

Schließlich umfasst die Erfindung ein Kraftfahrzeug mit der vorstehend beschriebenen Anzeigeeinrichtung.

Die Erfindung wird nun anhand eines Ausführungsbeispiels mit Bezug zu den Zeichnungen erläutert.

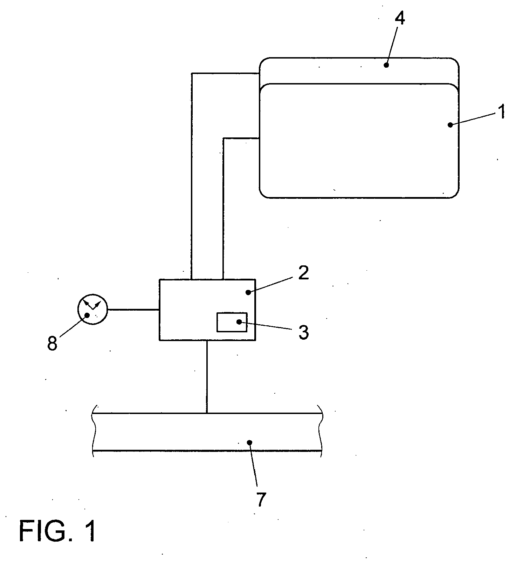

Figur 1              zeigt schematisch ein Ausführungsbeispiel der erfindungsgemäßen Anzeigeeinrichtung und die Verbindung dieser Anzeigeeinrichtung mit anderen Einrichtungen des Kraftfahrzeugs und

die Figuren 2 bis 10   zeigen von einem Ausführungsbeispiel des erfindungsgemäßen Verfahrens erzeugte Anzeigen auf der Anzeigefläche.

Das im Folgenden beschriebene Ausführungsbeispiel betrifft den Einsatz der Anzeigeeinrichtung und des Verfahrens in einem Fahrzeug, insbesondere einem Kraftfahrzeug. Mittels Anzeigeeinrichtung und durch das Verfahren können den Fahrzeuginsassen Informationen angezeigt werden. Es wird jedoch darauf hingewiesen, dass die Anzeigeeinrichtung und das Verfahren auf gleiche Weise auch in anderen Geräten, wie zum Beispiel mobilen Geräten, eingesetzt werden können.

Die Anzeigeeinrichtung umfasst eine Anzeigefläche 1, die so im Innenraum des Fahrzeugs angeordnet ist, dass sie von zumindest einem Fahrzeuginsassen, insbesondere dem Fahrer, gut sichtbar ist. Die Anzeigefläche 1 kann von einem Display, insbesondere einem Flüssigkristalldisplay, beliebiger Bauart bereitgestellt werden.

Die Anzeigefläche 1 ist mit einer Steuereinrichtung 2 verbunden, mit welcher Grafikdaten für auf der Anzeigefläche 1 darstellbare grafische Objekte erzeugbar sind. Ferner ist die Steuereinrichtung 2 mit einer Eingabeeinrichtung 4 verbunden, über welche der Benutzer Einrichtungen des Fahrzeugs, deren Informationen auf der Anzeigefläche 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor der Anzeigefläche 1 die Geste ausführen. Dabei wird die dreidimensionale Position der Hand in einem bestimmten Aufenthaltsbereich vor der Anzeigefläche 1 erfasst, ohne dass es erforderlich ist, dass die Anzeigefläche 1 berührt wird. Der zugelassene Aufenthaltsbereich hängt von der Anordnung der Anzeigefläche 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor der Anzeigefläche 1 liegen. Wird die Hand des Benutzers näher als dieser Schwellwert an die Anzeigefläche 1 heranbewegt, wird dies von der Eingabeeinrichtung 4 erkannt und die Annäherung wird als Bedienabsicht interpretiert. Dies kann z. B. dazu führen, dass die von der Anzeigefläche 1 angezeigten Objekte anders dargestellt werden. Ferner kann dies als Eingabe interpretiert werden, welche zu einem Wechsel des grafischen Objekts führt, wie es später im Detail erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektierte Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf der Anzeigefläche 1 vorgesehen ist. Mit der Folie kann die Position einer Berührung der hinter der Folie angeordneten Anzeigefläche 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einer auf der Anzeigefläche 1 angezeigten grafischen Schaltfläche zugeordnet werden.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf der Anzeigefläche, die den Druckschaltern zugeordnet sind, zumindest schematisch der Anordnung der Druckschalter entspricht.

Die Steuereinrichtung 2 ist ferner mit einer Systemuhr 8 und mit einem Fahrzeugbus 7 gekoppelt. Über den Fahrzeugbus 7 ist die Steuereinrichtung 2 mit Fahrerassistenzsystemen des Fahrzeugs verbunden. Die Steuereinrichtung 2 erhält über den Fahrzeugbus 7 Daten dieser Fahrerassistenzsysteme und bereitet die so auf, dass diese Daten dem Fahrer bzw. den Fahrzeuginsassen über die Anzeigefläche 1 grafisch dargestellt werden. Die Steuereinrichtung 2 erzeugt hierfür Grafikdaten für auf der Anzeigefläche 1 darstellbare Objekte, welche unter anderem die Informationen der Fahrerassistenzsysteme grafisch darstellen. Ferner ist die Steuereinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Steuereinrichtung 2 aufbereitet und in Grafikdaten für eine grafische Darstellung umgewandelt. Für Animationen der grafischen Darstellung auf der Anzeigefläche umfasst die Steuereinrichtung eine Recheneinheit 3, welche beim Erzeugen von Zwischenbildern auf die Systemuhr 8 zurückgreift.

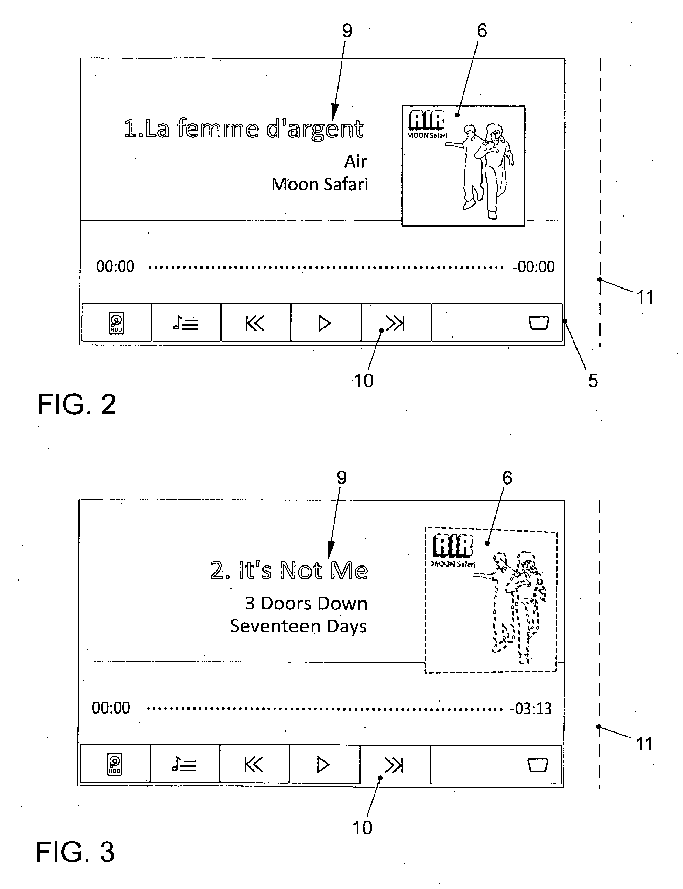

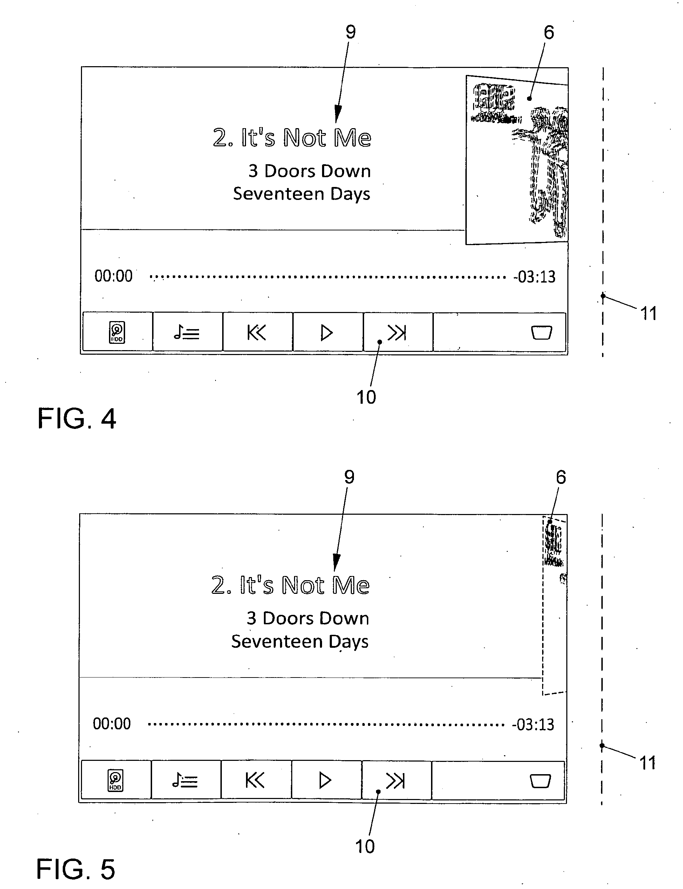

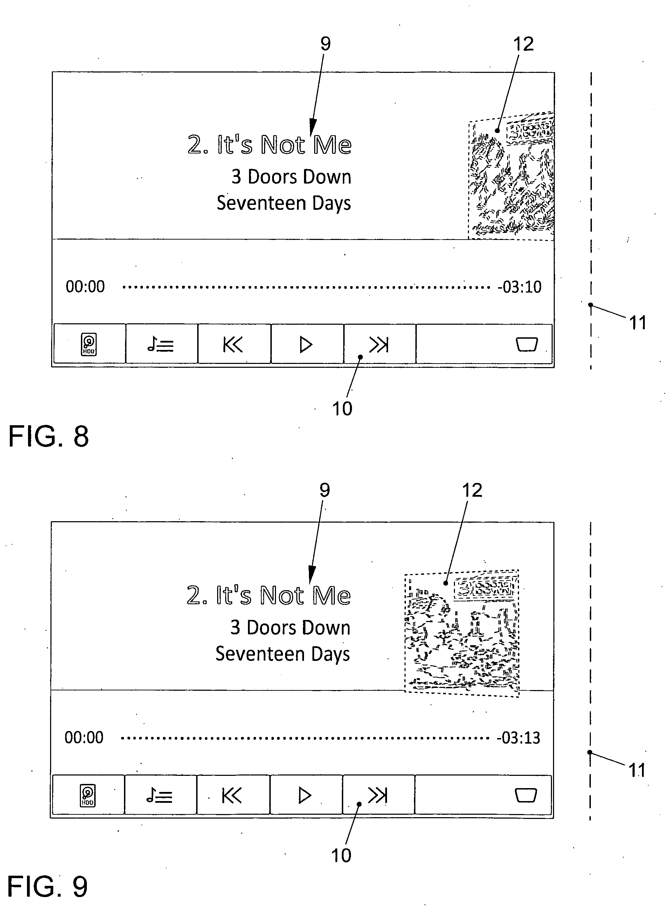

Im Folgenden wird ein Ausführungsbeispiel des erfindungsgemäßen Verfahrens, welches von der vorstehend beschriebenen Anzeigeeinrichtung ausführbar ist, mit Bezug zu den Figuren 2 - 10 im Detail erläutert:

Im Ausgangszustand des Verfahrens wird von der Anzeigefläche 1 die in Figur 2 wiedergegebene Information dargestellt. Die Anzeige umfasst ein flächiges graphisches Objekt 6. Der Anzeigeinhalt des Objekts 6 ist in dem vorliegenden Ausführungsbeispiel die Darstellung eines Covers eines Musikalbums. Neben dem graphischen Objekt 6 werden alphanumerische Informationen, die zu dem graphischen Objekt 6 gehören, im Anzeigefeld 9 angezeigt. Im vorliegenden Fall werden die zu dem Cover des Albums gehörigen Künstler, der Name des Albums und das aktuelle Musikstücks des Albums angezeigt. Des Weiteren werden in einer Leiste verschiedene Schaltflächen zum Steuern der Musikwiedergabe sowie zur Navigation innerhalb der gespeicherten Musikstücke wiedergegeben. Diese Leiste umfasst auch die Schaltfläche 10, welche dazu dient, das Album zu wechseln. Betätigt der Nutzer durch die Eingabeeinrichtung 4 die Schaltfläche 10, steuert die Steuereinrichtung 2 über den Fahrzeugbus 7 die Musikanlage des Fahrzeugs so an, dass das erste Stück des nächsten Albums wiedergegeben wird. Ferner erzeugt die Steuereinrichtung 2 Graphikdaten für die Anzeigefläche 1, welche diesen Wechsel des Albums visualisiert. Diese Veränderung des Anzeigeinhalts auf der Anzeigefläche 1 nach Betätigung der Schaltfläche 10 wird im Folgenden mit Bezug zu den Figuren 3 bis 10 erläutert:

Zunächst wechselt im Anzeigefeld 9 der Anzeigeinhalt. Der neue Anzeigeinhalt gibt Informationen zu dem nächsten Album wieder. Gleichzeitig wird das flächige graphische Objekt 6 um eine gedachte Achse 11, die sich außerhalb der Anzeigefläche 1 befindet, herausgeschwenkt. Diese Schwenkbewegung wird auf der Anzeigefläche 1, wie es in den Figuren 2 - 6 dargestellt ist, durch eine perspektivische Darstellung des Objekts 6 visualisiert. Es wird bemerkt, dass die Schwenkachse 11 auch mit dem seitlichen Rand 13 der Anzeigefläche 1 zusammenfallen könnte.

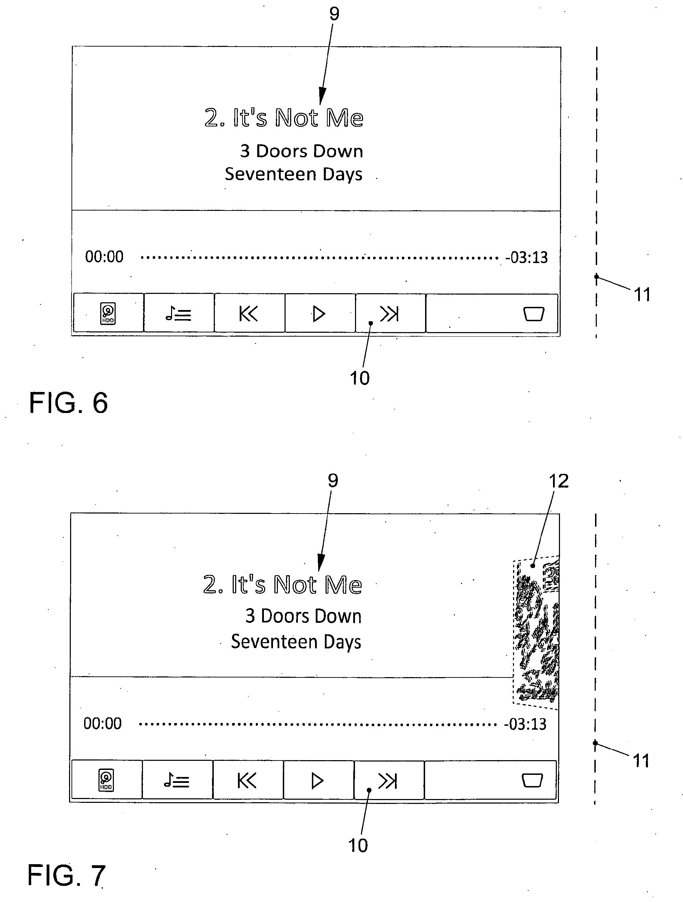

Wenn das graphische Objekt 6 vollständig verschwunden ist, wie es in Figur 6 dargestellt ist, wird ein zweites flächiges graphisches Objekt 12 in einer perspektivischen Darstellung auf der Anzeigefläche 1 um dieselbe Achse 11 hineingeschwenkt, wie es in den Figuren 7 bis 10 gezeigt ist. Das zweite graphische Objekt 12 ist dem Album zugeordnet, dessen Musikstücke nach der Betätigung der Schaltfläche 10 gespielt werden.

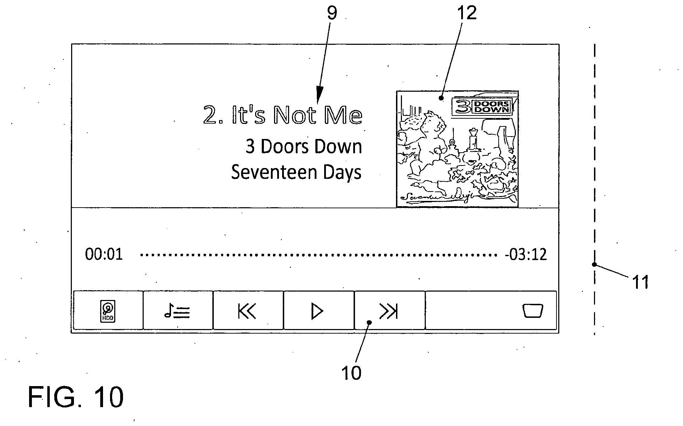

Wie aus den Figuren erkennbar, wird das Cover, welches von dem graphischen Objekt 6 dargestellt wird, beim Herausschwenken aus der Anzeige sukzessive immer unschärfer dargestellt, das Cover des zweiten graphischen Objekts 12 hingegen wird zunächst unscharf dargestellt und beim Hereinschwenken in die Anzeige sukzessive immer schärfer dargestellt, bis es wie in Figur 10 dargestellt, scharf angezeigt wird.

Das Herausschwenken des graphischen Objekts 6 und das Hereinschwenken des graphischen Objekts 12 stellen einen Übergang zwischen zwei statischen Darstellungen auf der Anzeigefläche 1 dar. Dieser Übergang soll es dem Betrachter erleichtern, möglichst einfach eine Beziehung zwischen dem Anfangszustand vor dem Schwenken und dem Endzustand nach dem Schwenken herzustellen. Aus diesem Grund wird ein fließender Übergang zwischen den beiden Zuständen wiedergegeben, bei dem Zwischenbilder angezeigt werden, welche den Übergang zwischen den zwei statischen Darstellungen verdeutlichen. Im Folgenden wird anhand des Schwenkens des flächigen graphischen Objekts 6 erläutert, wie der zeitliche Ablauf der Schwenkbewegung ist. Das Hereinschwenken des flächigengraphischen Objekts 12 erfolgt in analoger Weise.

Das Schwenken des graphischen Objekts wird in zwei Phasen unterteilt. Bei der ersten Phase wird das Objekt 6 von einer in Figur 2 gezeigten Ausgangsstellung um 45° um die Achse 11 geschwenkt. In einer zweiten Phase wird das graphische Objekt 6 weiter bis zu einem Schwenkwinkel vom 90° geschwenkt, so dass es, wie in Figur 6 gezeigt, nicht mehr sichtbar ist. Während des Schwenkens wird weiterhin der Anzeigeinhalt des graphischen Objekts 6 perspektivisch dargestellt, wobei sich die Schärfe wie oben erläutert verändert. Die perspektivische Darstellung der Schwenkbewegung erfolgt dabei so, dass der Betrachter direkt auf das graphische Objekt 6 schaut, d.h. die Betrachtungsrichtung für die perspektivische Darstellung verläuft parallel zur Normalen der Anzeigefläche 1.

Betrachtet man beispielsweise den linken Rand des graphischen Objekts 6, wandern die Blickpunkte dieses Rands nach rechts. Gleichermaßen kann man den Schwenkwinkel betrachten, um den das graphische Objekt 6 um die Achse 11 geschwenkt worden ist. Im Folgenden wird die Parametrisierung der Schwenkbewegung anhand der Position x beschrieben, die beispielsweise die Position des linken Rands des graphischen Objekts 6 in einer zur Schwenkachse 11 senkrechten Richtung wiedergeben kann.

Das Schwenken des grafischen Objekts 6 wird durch aufeinander folgende Zwischenbilder dargestellt, die aufeinander folgende Positionen der Bildpunkte des grafischen Objekts 6 anzeigen. Bei der Berechnung der Grafikdaten für diese Positionen x werden in der ersten Phase folgende Rechenschritte durchgeführt:

$$\text{(i)} \quad n = \frac{t - t_0}{d_1} \quad ;$$

$$\text{(ii)} \quad x = b_1 + c_1 \cdot n^4 \quad ,$$

wobei

t eine Systemzeit ist, zu der die erzeugten Grafikdaten auf der Anzeigefläche 1 dargestellt werden, wobei zu Beginn des Schwenkens der ersten Phase $t = t_0$ ist,

$d_1$ die Dauer der ersten Phase ist,

$b_1$ die Ausgangsposition des Bildpunkts des grafischen Objekts 6 ist,

$c_1$ die gesamte Verschiebung des Bildpunkts des grafischen Objekts 6 in der ersten Phase ist und wobei die Schritte (i) und (ii) so oft wiederholt werden, bis $t > (t_0 + d_1)$.

Für die zweite Phase werden folgende Rechenschritte durchgeführt:

$$(i) \quad n = \frac{t - t_0}{d_1} - 1 \quad ;$$

$$(ii) \quad x = b_2 + c_2 \cdot (1 - n^4) \quad ,$$

wobei

t eine Systemzeit ist, zu der die erzeugten Grafikdaten auf der Anzeigefläche 1 dargestellt werden, wobei zu Beginn des Schwenkens der zweiten Phase $t = t_0$ ist,
$d_2$ die Dauer der zweiten Phase ist,
$b_2$ die Ausgangsposition des Bildpunkts des grafischen Objekts 6 ist,
$c_2$ die Gesamtverschiebung des Bildpunkts des grafischen Objekts 6 in der zweiten Phase ist und
wobei die Schritte (i) und (ii) so oft wiederholt werden, bis gilt: $t > (t_0 + d_2)$.

Die Rechenschritte werden von der Recheneinheit 3 der Steuereinrichtung 2 ausgeführt, wobei der Recheneinheit 3 von der Systemuhr 8 die Systemzeit t übertragen wird.

Gemäß einer Weiterbildung des Ausführungsbeispiels werden in der Steuereinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer des Schwenkens für die beiden Phasen zu ermitteln. Dabei ist die Dauer des Schwenkens umso länger, je höher die Geschwindigkeit des Kraftfahrzeugs ist.

## Bezugszeichenliste

1 Anzeigefläche
2 Steuereinrichtung
3 Recheneinheit
4 Eingabeeinrichtung
5 seitlicher Rand der Anzeigefläche 1
6 grafisches Objekt
7 Fahrzeugbus
8 Systemuhr
9 Anzeigefeld
10 Schaltfläche
11 Schwenkachse
12 grafisches Objekt

## Patentansprüche

1. Verfahren zum Anzeigen von Informationen, bei dem

- zumindest ein erstes grafisches Objekt (6) auf einer Anzeigefläche (1), die in einem Kraftfahrzeug angeordnet ist, grafisch dargestellt wird und
- bei einem Wechsel zu einem zweiten grafischen Objekt (12) von einer Steuereinrichtung (2) Grafikdaten erzeugt werden, welche die Anzeigefläche (1) so ansteuern, dass das erste Objekt (6) verschwindet und das zweite Objekt (12) eingeblendet wird,

**dadurch gekennzeichnet, dass**

- bei einem Wechsel zu dem zweiten Objekt (12) von der Steuereinrichtung (2) Grafikdaten erzeugt werden, welche die Anzeigefläche (1) so ansteuern, dass das erste graphische Objekt (6) bei der perspektivischen Darstellung auf der Anzeigefläche (1) um eine erste außerhalb der Anzeigefläche (1) liegende Achse (11) herausgeschwenkt wird und das zweite graphische Objekt (12) bei der perspektivischen Darstellung auf der Anzeigefläche (1) um eine zweite außerhalb der Anzeigefläche (1) liegende Achse (11) hereingeschwenkt wird, bis es vollständig angezeigt wird, und

- die Schärfe des Anzeigeinhalts innerhalb des ersten und/oder des zweiten Objekts (6, 12) beim Schwenken verändert wird.

2. Verfahren nach Anspruch 1, **dadurch gekennzeichnet, dass** die erste und die zweite Achse (11) zusammenfallen.

3. Verfahren nach Anspruch 1 oder 2, **dadurch gekennzeichnet, dass** die erste und/oder die zweite Achse (11) mit einer Randseite (5) der Anzeigefläche (1) zusammenfällt/zusammenfallen.

4. Verfahren nach einem der vorhergehenden Ansprüche, **dadurch gekennzeichnet, dass** die erste und/oder die zweite Achse (11) parallel zu einer Seite (5) Anzeigefläche (1) ausgerichtet ist/sind.

5. Verfahren nach einem der vorhergehenden Ansprüche, **dadurch gekennzeichnet, dass** der Drehsinn beim Schwenken des ersten und zweiten Objekts (6, 12) derselbe ist.

6. Verfahren nach einem der vorhergehenden Ansprüche, **dadurch gekennzeichnet, dass** zumindest ein Teil des zweiten Objekts (12) erst dann angezeigt wird, wenn das erste Objekt (6) nicht mehr angezeigt wird.

7. Verfahren nach Anspruch 1, **dadurch gekennzeichnet, dass** die Schärfe des Anzeigeinhalts innerhalb des ersten Objekts (6) beim Herausschwenken abnimmt und die Schärfe des Anzeigeinhalts innerhalb des zweiten Objekts (12) beim Hereinschwenken zunimmt.

8. Verfahren nach einem der vorhergehenden Ansprüche, **dadurch gekennzeichnet, dass** dem ersten Objekt (6) ein Zeitintervall für die Anzeige des Objekts (6) zugeordnet ist und dass nach Ablauf des Zeitintervalls die Anzeige auf der Anzeigefläche (1) automatisch zu dem zweiten Objekt (12) wechselt.

9. Verfahren nach einem der vorhergehenden Ansprüche, **dadurch gekennzeichnet, dass** der Wechsel von dem ersten zu dem zweiten Objekt (6, 12) von einem Nutzer ausgelöst wird.

10. Verfahren nach einem der vorhergehenden Ansprüche, **dadurch gekennzeichnet, dass** die Steuereinrichtung (2) Grafikdaten für aufeinander folgende Zwischenbilder zur Darstellung des Herausschwenkens des ersten Objekts (6) und/oder des Hereinschwenkens des zweiten Objekts (12) erzeugt, wobei das Schwenken in eine erste Phase, bei der Bildpunkte des grafischen Objekts (6) beschleunigt bewegt werden, und eine zweite Phase, bei der Bildpunkte des grafischen Objekts (6, 12) abgebremst bewegt werden, unterteilt wird.

11. Verfahren nach einem der vorhergehenden Ansprüche, **dadurch gekennzeichnet, dass** die Geschwindigkeit des Kraftfahrzeugs gemessen wird und dass die Dauer des Herein- und/oder des Herausschwenkens und/oder die Dauer der ersten und/oder zweiten Phase in Abhängigkeit von der Geschwindigkeit des Kraftfahrzeugs ermittelt wird/werden.

12. Anzeigeeinrichtung zum Anzeigen von Informationen mit

- einer in einem Kraftfahrzeug angeordneten Anzeigefläche (1) zur grafischen Darstellung von zumindest grafischen Objekten (6, 12) und
- einer Steuereinrichtung (2), mit welcher bei einem Wechsel von einem ersten grafischen Objekt (6) zu einem zweiten grafischen Objekt (12) Grafikdaten erzeugbar sind, welche die Anzeigefläche (1) so ansteuern, dass das erste Objekt (6) verschwindet und das zweite Objekt (12) eingeblendet wird,

**dadurch gekennzeichnet, dass**

- von der Steuereinrichtung (2) die Grafikdaten so veränderbar sind, dass bei einem Wechsel zu dem zweiten Objekt (12) Grafikdaten erzeugbar sind, welche die Anzeigefläche (1) so ansteuern, dass das erste graphische Objekt (6) bei der perspektivischen Darstellung auf der Anzeigefläche (1) um eine erste außerhalb der Anzeigefläche liegende Achse (11) herausgeschwenkt wird und das zweite graphische Objekt (12) bei der perspektivischen Darstellung auf der Anzeigefläche (1) um eine zweite außerhalb der Anzeigefläche (1) liegende Achse hereingeschwenkt wird, bis es vollständig angezeigt wird, wobei die Schärfe des Anzeigeinhalts innerhalb des ersten und/oder des zweiten Objekts (6, 12) beim Schwenken verändert wird.

13. Anzeigeeinrichtung nach Anspruch 12, **dadurch gekennzeichnet, dass** eine Eingabeeinrichtung (4) vorgesehen ist und dass der Wechsel von dem ersten zu dem zweiten Objekt (6, 12) durch eine Eingabe in die Eingabeeinrichtung auslösbar ist.

14. Kraftfahrzeug mit einer Anzeigeeinrichtung nach einem der Ansprüche 12 oder 13.

**Claims**

1. Method for displaying information, in which

   - at least one first graphical object (6) is graphically depicted on a display (1) that is arranged in a motor vehicle, and
   - in the event of a change to a second graphical object (12), a control device (2) produces graphics data that actuate the display panel (1) such that the first object (6) disappears and the second object (12) is shown,

   **characterized in that**

   - in the event of a change to the second object (12), the control device (2) produces graphics data that actuate the display panel (1) such that the first graphical object (6) is swivelled out about a first axis (11), situated outside the display panel (1), in the perspective depiction on the display panel (1) and the second graphical object (12) is swivelled in about a second axis (11), situated outside the display panel (1), in the perspective depiction on the display panel (1) until said second graphical object is displayed completely, and
   - the sharpness of the display content within the first and/or the second object (6, 12) is altered during swivelling.

2. Method according to Claim 1, **characterized in that** the first and the second axis (11) coincide.

3. Method according to Claim 1 or 2, **characterized in that** the first and/or second axis (11) coincides/coincide with an edge side (5) of the display panel (1).

4. Method according to one of the preceding claims, **characterized in that** the first and/or the second axis (11) is/are oriented parallel to a side (5) of the display panel (1).

5. Method according to one of the preceding claims, **characterized in that** the direction of rotation for the swivelling of the first and second objects (6, 12) is the same.

6. Method according to one of the preceding claims, **characterized in that** at least part of the second object (12) is displayed only when the first object (6) is no longer displayed.

7. Method according to Claim 1, **characterized in that** the sharpness of the display content within the first object (6) decreases when it is swivelled out and the sharpness of the display content within the second object (12) increases when it is swivelled in.

8. Method according to one of the preceding claims, **characterized in that** the first object (6) has an associated interval of time for the display of the object (6) and **in that** the display on the display panel (1) automatically changes to the second object (12) after the interval of time has elapsed.

9. Method according to one of the preceding claims, **characterized in that** the change from the first to the second object (6, 12) is initiated by a user.

10. Method according to one of the preceding claims, **characterized in that** the control device (2) produces graphics data for successive intermediate images for depicting the swivelling-out of the first object (6) and/or the swivelling-in of the second object (12), wherein the swivelling is divided into a first phase, in which pixels of the graphical object (6) are moved in an accelerated manner, and a second phase, in which pixels of the graphical object (6, 12) are moved in a decelerated manner.

11. Method according to one of the preceding claims, **characterized in that** the speed of the motor vehicle is measured and **in that** the duration of the swivelling-in and/or of the swivelling-out and/or the duration of the first and/or second phase is/are ascertained on the basis of the speed of the motor vehicle.

12. Display device for displaying information, having

- a display panel (1), arranged in a motor vehicle, for graphically depicting at least graphical objects (6, 12), and
- a control device (2) that can be used, in the event of a change from a first graphical object (6) to a second graphical object (12), to produce graphics data that actuate the display panel (1) such that the first object (6) disappears and the second object (12) is shown,

**characterized in that**

- the control device (2) can alter the graphics data such that, in the event of a change to the second object (12), graphics data can be produced that actuate the display panel (1) such that the first graphical object (6) is swivelled out about a first axis (11), situated outside the display panel, in the perspective depiction on the display panel (1) and the second graphical object (12) is swivelled in about a second axis, situated outside the display panel (1), in the perspective depiction on the display panel (1) until said second graphical object is displayed completely, wherein the sharpness of the display content within the first and/or the second object (6, 12) is altered during swivelling.

13. Display device according to Claim 12, **characterized in that** an input device (4) is provided and **in that** the change from the first to the second object (6, 12) can be initiated by an input into the input device.

14. Motor vehicle having a display device according to either of Claims 12 and 13.


**Revendications**

1. Procédé pour afficher des informations, avec lequel

- au moins un premier objet graphique (6) est représenté graphiquement sur une surface d'affichage (1) qui est disposée dans un véhicule automobile et
- des données graphiques sont générées par un dispositif de commande (2) lors d'un changement en un deuxième objet graphique (12), lesquelles commandent la surface d'affichage (1) de telle sorte que le premier objet (6) disparaît et le deuxième objet (12) est incrusté,

**caractérisé en ce que**

- lors d'un changement en le deuxième objet (12), des données graphiques sont générées par le dispositif de commande (2), lesquelles commandent la surface d'affichage (1) de telle sorte que le premier objet graphique (6), dans le cas de la représentation en perspective sur la surface d'affichage (1), est pivoté vers l'extérieur autour d'un premier axe (11) qui se trouve en-dehors de la surface d'affichage (1) et le deuxième objet graphique (12), dans le cas de la représentation en perspective sur la surface d'affichage (1), est pivoté vers l'intérieur autour d'un deuxième axe (11) qui se trouve en-dehors de la surface d'affichage (1) jusqu'à ce qu'il soit entièrement affiché, et
- la netteté du contenu de l'affichage à l'intérieur du premier et/ou du deuxième objet (6, 12) est modifiée lors du pivotement.

2. Procédé selon la revendication 1, **caractérisé en ce que** le premier et le deuxième axe (11) coïncident.

3. Procédé selon la revendication 1 ou 2, **caractérisé en ce que** le premier et le deuxième axe (11) coïncide/coïncident avec un côté de bordure (5) de la surface d'affichage (1).

4. Procédé selon l'une des revendications précédentes, **caractérisé en ce que** le premier et le deuxième axe (11) est/sont orienté(s) parallèlement à un côté (5) de la surface d'affichage (1).

5. Procédé selon l'une des revendications précédentes, **caractérisé en ce que** le sens de rotation lors du pivotement du premier et du deuxième objet (6, 12) est le même.

**6.** Procédé selon l'une des revendications précédentes, **caractérisé en ce qu'**au moins une partie du deuxième objet (12) n'est affichée que lorsque le premier objet (6) n'est plus affiché.

**7.** Procédé selon la revendication 1, **caractérisé en ce que** la netteté du contenu de l'affichage à l'intérieur du premier objet (6) diminue lors du pivotement vers l'extérieur et la netteté du contenu de l'affichage à l'intérieur du deuxième objet (12) augmente lors du pivotement vers l'intérieur.

**8.** Procédé selon l'une des revendications précédentes, **caractérisé en ce qu'**un intervalle de temps pour l'affichage de l'objet (6) est associé au premier objet (6) et **en ce qu'**après écoulement de l'intervalle de temps, l'affichage sur la surface d'affichage (1) change automatiquement sur le deuxième objet (12).

**9.** Procédé selon l'une des revendications précédentes, **caractérisé en ce que** le changement du premier au deuxième objet (6, 12) est déclenché par un utilisateur.

**10.** Procédé selon l'une des revendications précédentes, **caractérisé en ce que** le dispositif de commande (2) génère des données graphiques pour des images intermédiaires successives en vue de la représentation du pivotement vers l'extérieur du premier objet (6) et/ou le pivotement vers l'intérieur du deuxième objet (12), le pivotement étant divisé en une première phase, dans laquelle les pixels de l'objet graphique (6) sont accélérés, et une deuxième phase, dans laquelle les pixels de l'objet graphique (6, 12) sont freinés.

**11.** Procédé selon l'une des revendications précédentes, **caractérisé en ce que** la vitesse du véhicule est mesurée et **en ce que** la durée du pivotement vers l'intérieur et/ou vers l'extérieur et/ou la durée de la première et/ou de la deuxième phase est/sont déterminées en fonction de la vitesse du véhicule.

**12.** Dispositif d'affichage destiné à afficher des informations, comprenant

- une surface d'affichage (1) disposée dans un véhicule automobile servant à la représentation graphique d'au moins des objets graphiques (6, 12) et
- un dispositif de commande (2) avec lequel peuvent être générées des données graphiques lors d'un changement d'un premier objet graphique (6) en un deuxième objet graphique (12), lesquelles commandent la surface d'affichage (1) de telle sorte que le premier objet (6) disparaît et le deuxième objet (12) est incrusté,

**caractérisé en ce que**

- les données graphiques peuvent être modifiées par le dispositif de commande (2) de telle sorte que lors d'un changement en le deuxième objet (12), des données graphiques peuvent être générées qui commandent la surface d'affichage (1) de telle sorte que le premier objet graphique (6), dans le cas de la représentation en perspective sur la surface d'affichage (1), est pivoté vers l'extérieur autour d'un premier axe (11) qui se trouve en-dehors de la surface d'affichage (1) et le deuxième objet graphique (12), dans le cas de la représentation en perspective sur la surface d'affichage (1), est pivoté vers l'intérieur autour d'un deuxième axe (11) qui se trouve en-dehors de la surface d'affichage (1) jusqu'à ce qu'il soit entièrement affiché, la netteté du contenu de l'affichage à l'intérieur du premier et/ou du deuxième objet (6, 12) étant modifiée lors du pivotement.

**13.** Dispositif d'affichage selon la revendication 12, **caractérisé en ce qu'**il existe un dispositif de saisie (4) et **en ce que** le changement du premier au deuxième objet (6, 12) peut être déclenché par une saisie dans le dispositif de saisie.

**14.** Véhicule automobile équipé d'un dispositif d'affichage selon l'une des revendications 12 ou 13.

FIG. 1

FIG. 2

FIG. 3

9    6

2. It's Not Me

3 Doors Down
Seventeen Days

00:00 ································ -03:13

| 🖥 HDD | ♪≡ | K≪ | ▷ | ≫I | | ▽ |

11

10

## FIG. 4

9    6

2. It's Not Me

3 Doors Down
Seventeen Days

00:00 ································ -03:13

| 🖥 HDD | ♪≡ | K≪ | ▷ | ≫I | | ▽ |

11

10

## FIG. 5

9

2. It's Not Me

3 Doors Down
Seventeen Days

00:00 ················································· -03:13

11

10

## FIG. 6

9   12

2. It's Not Me

3 Doors Down
Seventeen Days

00:00 ················································· -03:13

11

10

## FIG. 7

9    12

2. It's Not Me
3 Doors Down
Seventeen Days

00:00 ................................................ -03:10

11

10

FIG. 8

9    12

2. It's Not Me
3 Doors Down
Seventeen Days

00:00 ................................................ -03:13

11

10

FIG. 9

FIG. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006032118 A1
- DE 19941956 A1
- WO 2009024474 A1
- WO 2010010025 A1
- DE 10058244 C2
- DE 10305341 A1
- DE 102004048956 A1